# EUROPEAN PATENT APPLICATION

(11) **EP 4 700 233 A1**
(43) Date of publication of application: **25.02.2026**
(21) Application number: 24195257.1
(22) Date of filing: 19.08.2024
(51) Int. Cl.: F03D 1/06, F03D 13/35

(54) **METHOD OF BALANCING ROTOR BLADE SEGMENTS FOR A SET OF WIND TURBINE ROTOR BLADES**

(71) Applicant: Nordex Energy SE & Co. KG, 22419 Hamburg (DE)
(72) Inventor: Block, Tim Berend, 22419 Hamburg (DE)
(74) Representative: Völkl Siebenson Patentanwälte - Partnerschaft mbB

(57) **Abstract**

The invention concerns a method of balancing rotor blade segments (132, 134) for a set of wind turbine rotor blades (110), the method comprising the steps:
- providing a set of rotor blade segments (132, 134), the set of rotor blade segments (132, 134) comprising first rotor blade segments (132) and second rotor blade segments (134),
- balancing the first rotor blade segments (132) comprising the sub-steps:
-- determining a mass moment of each of the first rotor blade segments (132),
-- determining a first rotor blade segment (132) having the highest mass moment amongst the first rotor blade segments (132),
-- adding balancing ballast (138) to each of the remaining first rotor blade segments (132) such that each of the remaining first rotor blade segments (132) has a mass moment equal to the highest mass moment,

- connecting each first rotor blade segment (132) to a second rotor blade segment (134) to form the set of wind turbine rotor blades (110).

## Description

In invention relates to a method of balancing rotor blade segments for a set of wind turbine rotor blades.

Wind turbines with wind turbine rotor blades are widely known from the state of the art and are used to convert wind energy into electrical energy. A rotor blade can be designed as a split or segmented rotor blade, in which rotor blade segments are arranged and joined together lengthwise to form an entire rotor blade. Mechanical connections are commonly used to join the two rotor blade segments. Typically, a plurality of connection elements, e.g. cross bolts or bushings, is integrated into the laminate of each rotor blade segment, by means of which the rotor blade segments can be connected to each other, either directly or via one or more suitable intermediate connection pieces. Typically, fastening means or connecting means such as fastening bolts, e.g. screw bolts, or the like are used for a direct connection or for connecting to the one or more intermediate connection pieces. A generic structure is known, for example, from international application WO 2015/124568 A1. Alternatively, the rotor blade segments can be connected by adhesive technology.

Segmented rotor blades are becoming increasingly important and provide advantages, in particular for transport reasons, since the overall length of the rotor blades tends to increase in order to achieve a higher energy output.

A known challenge with regard to wind turbine rotor blades is that the rotor blade segments need to be balanced perfectly prior to connecting them to a wind turbine rotor hub of the wind turbine. For a wind turbine having three wind turbine rotor blades, provision of, for example, groups of three identical rotor blade segments should be provided. However, in practice, variability in the manufacturing processes for each blade segment can mean that the assembled wind turbine rotor blades are often not identical to each other. These variations of the blades can create, for example, instability, uneven forces on the hub and undesirable vibrations. This may result in an unstable wind turbine and may negatively impact the longevity of the wind turbine.

One object underlying the present invention is to provide an efficient and reliable method for balancing rotor blades comprising two or more segments arranged in a longitudinal direction for a set of wind turbine rotor blades.

This object is achieved by the independent claims and the respective sub-claims.

A method of balancing rotor blade segments for a set of wind turbine rotor blades is described. The method comprises the steps of:
- providing a set of rotor blade segments, the set of rotor blade segments comprising first rotor blade segments and second rotor blade segments,
- balancing the first rotor blade segments comprising the sub-steps:
   -- determining a mass moment of each of the first rotor blade segments,
   -- determining a first rotor blade segment having the highest mass moment amongst the first rotor blade segments,
   -- adding balancing ballast to each of the remaining first rotor blade segments such that each of the remaining first rotor blade segments has a mass moment equal to the highest mass moment,
- connecting each first rotor blade segment to a second rotor blade segment to form the set of wind turbine rotor blades.

The described method provides that at least one group of several rotor blade segments, i.e. the first rotor blade segments, is balanced, while the second rotor blade segments do not necessarily have to be balanced. In other words, the first rotor blade segments are pre-balanced and can be combined with other blade segment types, e.g. the second rotor blade segments, independent of their mass moment. The method is particularly advantageous if the second rotor blade segments can be manufactured identically or almost identically in terms of the mass moment or if the deviations regarding the mass moment of the second segments as described above only have a subordinate influence on the overall mass moment of a wind turbine rotor blade. Conversely, this means that, in particular if the production-related deviations of mass moments of the blade segments as described above play a significant role in the first rotor blade segments, at least these deviations must be minimized.

The described method provides an efficient (time efficient, cost efficient), and comparatively less complex process to balance a set of segmented wind turbine rotor blades. In particular, balancing three segmented wind turbine rotor blades for creation of a complete set of segmented wind turbine rotor blades on-site is simplified.

Thus, vibrations of the drive train and consequently whole wind turbine can efficiently be brought to a sufficiently small level, which would otherwise lead to very high wear and tear up and thus to severe damage of the structural components of the wind turbine.

Further, the method contributes to minimize the overall mass moment of the wind turbine rotor blade set. Alternatively, or additionally, the amount of balancing ballast used is minimized.

With regard to the step of connecting each first rotor blade segment to a second rotor blade segment it is noted that this can mean a direct connection between the first and second rotor blade segment, but this does not exclude embodiments in which an intermediate piece is used for the connection of the two blade segments. Further, this may also mean that one or more further blade segments, e.g. a third blade segment, may be connected in between the respective first and second rotor blade segment.

A rotor blade segment is a section of a segmented wind turbine rotor blade. In one example, the first rotor blade segments are root segments or inboard segments, and the second rotor blade segments are tip segments or outboard segments. In another configuration, the first rotor blade segments may be the tip segments, and the second rotor blade segments may be the root segments. A rotor blade segment comprises fiber reinforced plastic material. A rotor blade segment may comprise further materials, however in the context of this writing, a rotor blade segment is not understood to comprise only one or more metal materials.

A set of rotor blade segments defines the different rotor blade segments needed to create a set of wind turbine rotor blades. One rotor blade segment of each type is joined together to form an entire segmented wind turbine rotor blade. With regard to the above-described method, within the set of first rotor blade segments, the rotor blade segment with the highest mass moment determines the target value for all first rotor blades of the set that needs to be reached.

A set of wind turbine rotor blades typically means three wind turbine rotor blades, each being comprised of a first and second rotor blade segment and being configured to be installed at one wind turbine.

The mass moment of a rotor blade segment is the product of (i.e. multiplication of) the mass of the object, and the distance of the mass from a reference point or axis, e.g. the root end of a root segment. This may be an axis about which the object moves, specifically rotates, in use. The unit of a mass moment is kgm. The mass moment can be determined in practice by multiplying the overall mass of the object by the distance of the center of mass from the reference point or axis. The mass moment of an entire wind turbine rotor blade is the sum of (i.e. addition of) the mass moments of the associated rotor blade segments of the respective wind turbine rotor blade. For example, for a wind turbine rotor blade consisting of a root rotor blade segment and a tip rotor blade segment, the entire mass moment can be considered the mass moment of the root rotor blade segment plus (added to) the mass moment of the tip rotor blade segment.

Typical mass moments of rotor blades with an entire length of 80 to 100m are 500,000 kgm to 1,000,000 kgm.

The highest mass moment of the (unbalanced) first rotor blade segments means the mass moment, which the respective one first rotor blade segment has after production and without adding balancing ballast. This definition similarly applies to second or third rotor blade segments, if they are balanced in an analogous way (see below).

An unbalanced (non-balanced) rotor blade segment refers to a rotor blade segment which will not be balanced before the respective unbalanced rotor blade segment is connected to another rotor blade segment, in particular at the installation site of the wind turbine.

A balanced rotor blade segment refers to a rotor blade segment after it has been balanced, i.e. after supplementary mass or ballast has been added.

The term ballast used herein refers to a mass suitable for use as a supplementary mass for a rotor blade segment, and may be suitable for, configured for or adapted for attachment to a rotor blade or a rotor blade section of a wind turbine. For the purpose of balancing, typically one or more balancing chambers are built into the respective rotor blade segment at a predetermined position. A balancing chamber can be filled with a balancing ballast. Such balancing ballast is typically a rather cheap adhesive-like material, which hardens after injection into the balancing chamber. This material can be topped up with heavier materials such as e.g. steel balls or chalk to increase the mass' density.

According to an embodiment, the method comprises the further step of balancing the second rotor blade segments. In this embodiment, both the first and second rotor blade segments are balanced. As a result, the total mass moments of the rotor blades are very precisely harmonized.

According to an embodiment, balancing the second rotor blade segments is carried out in the same way as described above for the first rotor blade segments and comprises the sub-steps:
-- determining a mass moment of each of the second rotor blade segments,
-- determining the second rotor blade segment having the highest mass moment amongst the second rotor blade segments,
-- adding balancing ballast to each of the remaining second rotor blade segments such that each of the remaining second rotor blade segments has a mass moment equal to the highest mass moment.

Like above, these sub-steps contribute to a very efficient balancing, since the rotor blade segment with the highest mass moment serves as a reference blade segment and thus needs not to be provided with additional ballast.

According to an embodiment, the second rotor blade segments are not balanced to each other prior to being connected to the first rotor blade segments. This means that no additional ballast for balancing is added to the second rotor blade segments. For example, the second rotor blade segments are tip segments and are more or less identically manufactured. This means that in this case the second rotor blade segments have an equal or nearly identical mass moment or differences in their mass moments are not significant. We refer to the above-mentioned functions and advantages.

According to an embodiment, each first rotor blade segment is a root segment of a wind turbine rotor blade and wherein each second rotor blade segment is a tip segment of the wind turbine rotor blade. This embodiment refers to "regular" segmented wind turbine rotor blades, which comprise a large root segment (typically 60 % to 80 % of the total length of a wind turbine rotor blade) and a short tip segment (typically 20 % to 40 % of the total a wind turbine rotor blade.

According to an embodiment, each first rotor blade segment is a tip segment, and each second rotor blade segment is a root segment. Thus, for example, only the tip segments are balanced as described above. This embodiment refers to wind turbine rotor blades with comparatively short root segments and long tip segments. Each root segment is preferably a cylindrically portion, but alternatively may comprise a portion of the aerodynamic profile of the wind turbine rotor blade. For example, such root segments are so-called blade root extensions, which each form a part of a wind turbine rotor blade. Such extension, however, does not refer to an extender, which is an intermediate part to connect a wind turbine rotor to a rotor hub and is only built from metallic materials.

According to an embodiment, each first rotor blade segment - when connected to the second rotor blade segment - makes up at least 80% of the total length of the corresponding rotor blade. We refer to the above description.

According to an embodiment, the first and second rotor blade segments comprise a fiber reinforced plastic material. Thus, it is made clear that the first and second rotor blade segments are not produced from metal materials only.

According to an embodiment, the set of rotor blade segments additionally comprises third rotor blade segments, and wherein in the step of connecting each of the third rotor blade segments is connected with one of the first rotor blade segments and/or one of the second rotor blade segments to form the set of wind turbine rotor blades. Thus, a formed wind turbine rotor blade comprises three segments, wherein depending on the rotor blade the respective third segment, can be positioned between the first and second segment or can form a root section or a tip section of the formed rotor blade. The third segments may or may not be balanced similar to the above description.

According to an embodiment, the method comprises the further step of balancing the third rotor blade segments. We refer to our description above with regard to the second rotor blade segments, which similarly applies.

According to an embodiment, balancing the third rotor blade segments comprises the sub-steps:
-- determining a mass moment of each of the third rotor blade segments,
-- determining the third rotor blade segment having the highest mass moment amongst the third blade segments,
-- adding balancing ballast to each of the remaining third rotor blade segments such that each of the remaining third blade segments has a mass moment equal to the highest mass moment.

Again, we refer to our description above with regard to the second rotor blade segments, which similarly applies.

According to an embodiment, the third rotor blade segments are not balanced to each other prior to being connected to the first rotor blade segments or the second rotor blade segments. Again, we refer to our description above with regard to the second rotor blade segments, which similarly applies.

According to an embodiment, the third rotor blade segments comprise a fiber reinforced plastic material. Again, we refer to our description above with regard to the second rotor blade segments, which similarly applies.

It is noted that in a subsequent step a fine tuning of the entire mass moment of a wind turbine rotor blade, wherein all rotor blade segments of the wind turbine rotor blade are connected to each other, may take place. However, this fine tuning only takes place at the installation site of the respective wind turbine.

Further advantages, features and functions, which are explained in connection with the figures, are given in the following exemplary embodiments of the invention. Identical, similar or similarly acting elements are provided with the same reference signs in the figures. In the figures:
Figure 1 shows a schematic view of a wind turbine,
Figure 2 shows a schematic view of a rotor blade,
Figure 3 shows a schematic flow chart of a method according to an embodiment of the invention,
Figure 4 shows a schematic set of wind turbine rotor blades according to the embodiment of figure 3,
Figures 5 and 6 show schematic sets of wind turbine rotor blades according to further embodiments of the invention.

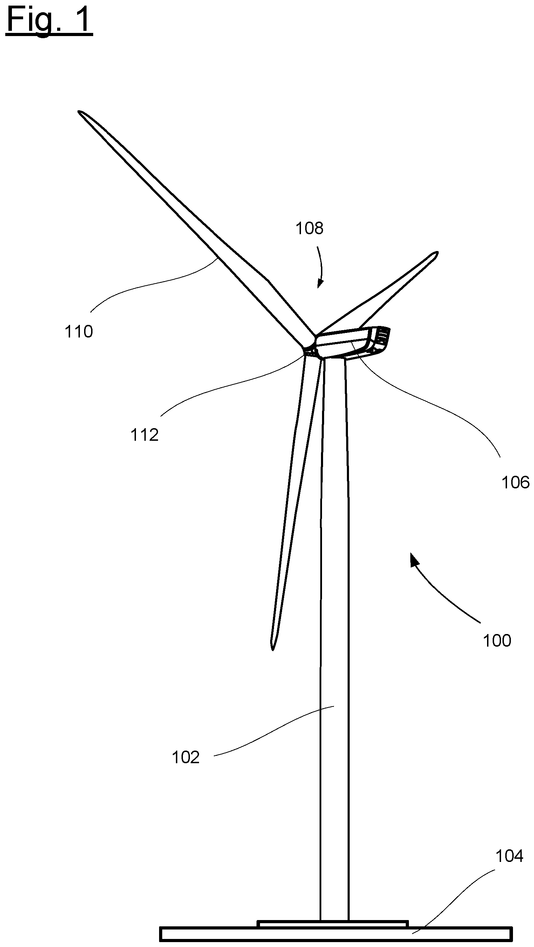

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the kinetic energy of the rotor 108 into electrical energy.

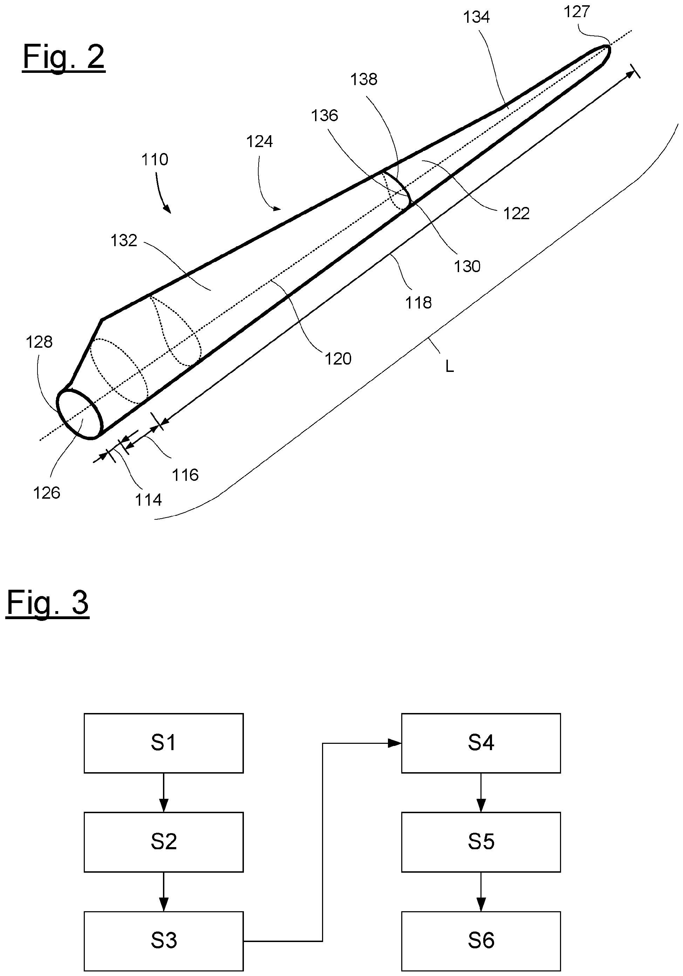

Figure 2 shows an exemplary wind turbine rotor blade 110. The rotor blade 110 has the shape of a conventional rotor blade and has a rotor blade root area 114 facing the rotor hub 112. The rotor blade root area 114 typically has an essentially circular cross-section. The rotor blade root area 114 is followed by a transition area 116 and a profile area 118 of the rotor blade 110. The rotor blade 110 has a pressure side 122 and an opposite suction side 124 with respect to a longitudinal extension direction 120 (also main extension direction). The rotor blade 110 is essentially hollow inside.

In the rotor blade root area 114 a rotor blade connection end 126 with a flange connection 128 is provided, by means of which the rotor blade 110 is mechanically connected to a pitch bearing or an extender.

The rotor blade 110 comprises a division area 130 where a root(-side) rotor blade segment 132 and a tip(-side) rotor blade segment 134 are connected to each other. For this purpose, both segments 132, 134 each comprise a respective connection region 136, 138. The rotor blade 110 is thus a split rotor blade as described above.

In the following, embodiments of the invention referring to an optimized balancing of a set of three segmented wind turbine rotor blades 110 are described.

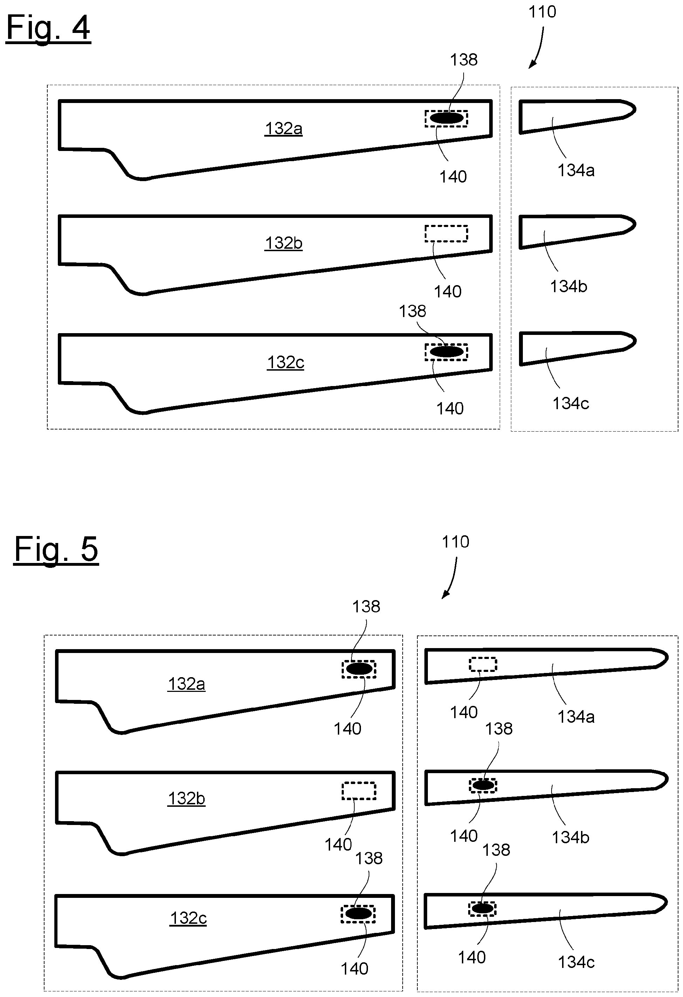

Figure 3 refers to schematic flow chart of a method of balancing rotor blade segments for a set of wind turbine rotor blades 110, which is shown exemplarily in figure 4.

In a first step S1, a set of rotor blade segments is provided. With respect to the example shown in figure 4, the set of rotor blade segments comprises three first rotor blade segments 132 (132a, 132b, 132c) and three second rotor blade segments 134 (134a, 134b, 134c) for building a set of three wind turbine rotor blades 110. The first rotor blade segments 132 are root segments to be attached to the rotor hub 112. The second rotor blade segments 134 are tip segments. Each rotor blade segment 132, 134 comprise a fiber reinforced plastic material. The tip segments 134 are much smaller than the root segments 132.

In a second step S2, the first rotor blade segments 132 are balanced. This balancing is performed by the following sub-steps S3 to S5:
In a step S3, a mass moment of each of the first rotor blade segments 132 is determined.

In a step S4, the first rotor blade segment 132 is determined which has the highest mass moment amongst the first rotor blade segments 132. In figure 4, the first rotor blade segment 132b exemplarily has the highest mass moment.

In a step S5, balancing mass 138 is added to each of the remaining first rotor blade segments 132a and 132c such that each of the remaining first rotor blade segments 132a and 132c has a mass moment equal to the highest mass moment. In this regard, the balancing ballast 138 is brought in the respective balancing chambers 140 of the respective first rotor blade segments as described in the introductory portion of this description.

The second rotor blade segments 134 are not balanced, since in the present example these tip segments 134 are manufactured nearly identical with respect to mass moment. This means that the mass moment of each of the tip segments 134 is within an allowed tolerance.

In a step S6, each first rotor blade segment 132 is connected mechanically / chemically to a respective second rotor blade segment 134 to form the set of three wind turbine rotor blades 110.

The above-described method enables the functions and advantages as given in the introductory portion of this description. Particularly, since the second rotor blade segments 134 are rather identically produced and not balanced, the described balancing process is comparatively simple and does not require a high amount of balancing ballast.

Figure 5 refers to method of balancing according to a further embodiment of the invention. The above description of the method and components alongside figures 3 and 4 analogously applies. However, different to the above embodiment, the length of the tip segments is nearly the same as the length of the root segments. In this embodiment, not only the first rotor blade segments 132, but also the second rotor blade segments 134 are balanced. In this regard, the same procedure is used as with the first rotor blade segments. Thus, prior to connecting the second rotor blade segments 134 to the first rotor blade segments 134, the following sub-steps of the method are performed:
First, a mass moment of each of the second rotor blade segments 134 is determined. After, the second rotor blade segment 134 having the highest mass moment amongst the second rotor blade segments 134 is determined. In this example, the second rotor blade segment 134a (top one in figure 5) has the highest mass moment. After that, balancing ballast 138 is added to each of the remaining second rotor blade segments 134b, 134c into their balancing chambers 140 such that each of the remaining second rotor blade segments 134b, 134c has a mass moment equal to the highest mass moment of the second rotor blade segment 134a.

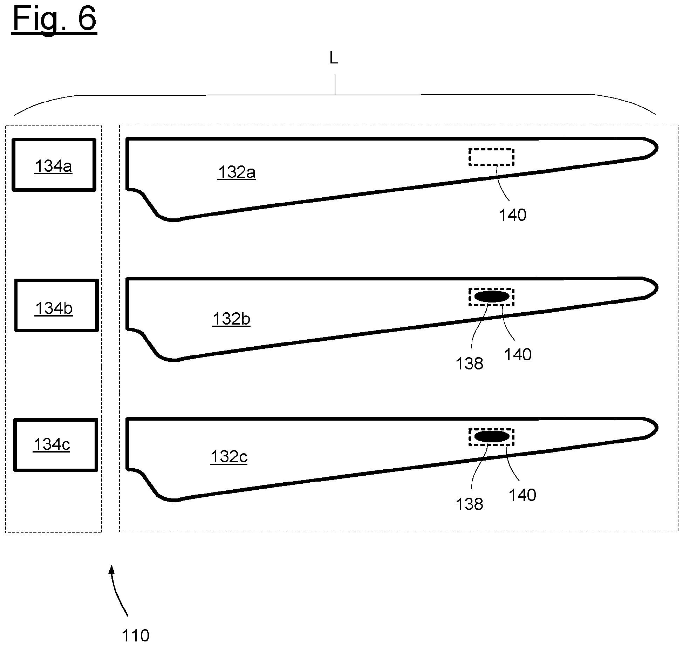

Figure 6 refers to method of balancing according to a further embodiment of the invention. In general, the above description of the methods and components alongside figures 3 to 5 analogously applies. However, different to the above embodiments, the first rotor blade segments 132 are tip-side segments and each second rotor blade segment 134 is a root-side segment. Here, the root-side segments 134 are blade root extensions having a much smaller length than the tip-side segments. In the example shown, each first rotor blade segment 132 - when connected to the second rotor blade segment - makes up at least 80% of the total length L (see also figure 2) of the corresponding rotor blade 110. Again, both the first and second rotor blade segments 132, 134 comprise fiber reinforced plastic material.

The first rotor blade segments 132 are again balanced according to the steps S2 to S5 as described above, wherein the first rotor blade segment 132a has the highest mass moment amongst the first rotor blade segments 132. The root extensions 134 are connected to the first rotor blade segments 132 without any addition of balancing ballast, i.e. these segments are unbalanced.

The above description analogously applies to embodiments of the invention referring to sets of wind turbine rotor blades 110, which comprise three rotor blade segments. There are embodiments where only the first rotor blade segments 132 are balanced according to the above-described procedure, while the second rotor blade segments 134 and the third rotor blades segments remain unbalanced. In other embodiments, in addition to the first rotor blade segments 132 even the second rotor blade segments 134 and/or the third rotor blades segments may be balanced, e.g. according to the above-described procedure.

### Reference signs

- 100: wind turbine
- 102: tower
- 104: foundation
- 106: nacelle
- 108: rotor
- 110: rotor blade
- 112: rotor hub
- 114: rotor blade root area
- 116: transition area
- 118: profile area
- 120: longitudinal extension direction
- 122: pressure side
- 124: suction side
- 126: rotor blade connection end
- 128: flange connection
- 130: division area
- 132(a-c): first rotor blade segment
- 134(a-c): second rotor blade segment
- 136: connection region
- 138: balancing ballast
- 140: balancing chamber

- L: length
- S1-S5: step

## Claims

1. Method of balancing rotor blade segments (132, 134) for a set of wind turbine rotor blades (110), the method comprising the steps:
- providing a set of rotor blade segments (132, 134), the set of rotor blade segments (132, 134) comprising first rotor blade segments (132) and second rotor blade segments (134),
- balancing the first rotor blade segments (132) comprising the sub-steps:
-- determining a mass moment of each of the first rotor blade segments (132),
-- determining a first rotor blade segment (132) having the highest mass moment amongst the first rotor blade segments (132),
-- adding balancing ballast (138) to each of the remaining first rotor blade segments (132) such that each of the remaining first rotor blade segments (132) has a mass moment equal to the highest mass moment,
- connecting each first rotor blade segment (132) to a second rotor blade segment (134) to form the set of wind turbine rotor blades (110).

2. Method according to claim 1, comprising the further step of balancing the second rotor blade segments (134).

3. Method according to claim 2, wherein balancing the second rotor blade segments (134) comprises the sub-steps:
-- determining a mass moment of each of the second rotor blade segments (134),
-- determining the second rotor blade segment (134) having the highest mass moment amongst the second rotor blade segments (134),
-- adding balancing ballast to each of the remaining second rotor blade segments (134) such that each of the remaining second rotor blade segments (134) has a mass moment equal to the highest mass moment.

4. Method according to claim 1, wherein the second rotor blade segments (134) are not balanced to each other prior to being connected to the first rotor blade segments (132).

5. Method according to any one of the preceding claims, wherein each first rotor blade segment (132) is a root segment of a wind turbine rotor blade (110) and wherein each second rotor blade segment (134) is a tip segment of the wind turbine rotor blade (110).

6. Method according to claims 1 to 4, wherein each first rotor blade segment (132) is a tip segment, and each second rotor blade segment (134) is a root segment.

7. Method according to claim 6, wherein each first rotor blade segment (132) - when connected to the second rotor blade segment (134) - makes up at least 80% of the total length (L) of the corresponding rotor blade (110).

8. Method according to any one of the preceding claims, wherein the first and second rotor blade segments (132, 134) comprise a fiber reinforced plastic material.

9. Method according to claims 1 to 4, wherein the set of rotor blade segments (132, 134) additionally comprises third rotor blade segments, and wherein in the step of connecting each of the third rotor blade segments is connected with one of the first rotor blade segments (132) and/or one of the second rotor blade segments (134) to form the set of wind turbine rotor blades (110).

10. Method according to claim 9, comprising the further step of balancing the third rotor blade segments.

11. Method according to claim 10, wherein balancing the third rotor blade segments comprises the sub-steps:
-- determining a mass moment of each of the third rotor blade segments,
-- determining the third rotor blade segment having the highest mass moment amongst the third blade segments,
-- adding balancing ballast to each of the remaining third rotor blade segments such that each of the remaining third blade segments has a mass moment equal to the highest mass moment.

12. Method according to claim 10, wherein the third rotor blade segments are not balanced to each other prior to being connected to the first rotor blade segments (132) or the second rotor blade segments (134).

13. Method according to any one of the claims 9 to 12, wherein the third rotor blade segments comprise a fiber reinforced plastic material.
